# FASCICULE DE BREVET EUROPEEN

(11) **EP 0 630 685 B1**
(45) Date de publication et mention de la délivrance du brevet: **24.02.1999**
(21) Numéro de dépôt: 94490028.1
(22) Date de dépôt: 20.06.1994
(51) Int. Cl.: B01J 43/00, B01J 39/20, C08F 8/34

(54) **Procédé de préparation d'un matériau polymérique échangeur d'ions à fonctions sulfoniques et matériau obtenu**
Verfahren zur Herstellung eines polymerischen Ionenaustauschermaterials mit Sulfonfunktionen
Process for preparing of a polymeric ionexchange material with sulfonic functions

(30) Priorité: 28.06.1993 FR 9308037
(43) Date de publication de la demande: 28.12.1994
(73) Titulaire: Centre Technique Industriel dit: INSTITUT TEXTILE DE FRANCE, 92223 Bagneux Cédex (FR)
(72) Inventeur: Gavet, Louis, F-69005 Lyon (FR); Chatelin, Roger, F-69380 Lissieu par Lozanne (FR)
(74) Mandataire: Hénnion, Jean-Claude

(56) Documents cités:
- GB-A- 1 077 772
- GB-A- 1 230 363
- REACTIVE POLYMERS, vol.4, no.3, Juillet 1986 pages 181 - 194 BOLTO B.A. 'AMPHOTERIC ION-EXCHANGE RESINS CONTAINING SULFONIC ACID GROUPS FROM EPICHLOROHYDRIN'
- DATABASE WPI Week 7343, Derwent Publications Ltd., London, GB; AN 73-64623U & JP-A-48 051 092 (MATSUSHITA ELECTRIC) 7 Août 1979

## Description

La présente invention concerne un matériau polymérique comportant dans sa structure des fonctions échangeuses d'ions du type sulfonique. Elle concerne plus particulièrement un matériau échangeur mixte, à savoir comportant à la fois des fonctions échangeuses d'anions et de cations, plus précisément des fonctions sulfoniques et des fonctions amines tertiaires. La présente invention concerne notamment un procédé de fabrication de tels matériaux.

La création d'une fonction sulfonique sur un matériau destiné à servir d'échangeur d'ions est obtenue de manière classique par sulfonation directe à partir d'oléum ou encore d'acide chlorosulfonique. On utilise en particulier l'oléum dans la fabrication des résines échangeuses de cations fortes à base de polystyrène réticulé. Un tel procédé de sulfonation directe est très agressif et exige des conditions et précautions particulières de mise en oeuvre : travail en réacteur clos, utilisation de condenseur et de pièges, absence absolue d'humidité pour éviter l'hydrolyse de l'acide chlorosulfonique, nécessité de travailler en milieu solvant... De plus la technique de sulfonation directe n'est pas applicable à l'ensemble des matériaux polymériques du fait qu'elle provoque sur ledit matériau une dégradation qui peut aller jusqu'à la destruction notamment dans le cas des polymères cellulosiques, des fibres naturelles, des polyamides , des polyuréthannes. Il est également à noter que l'acide chlorosulfonique est un produit coûteux de même que le solvant qui doit être utilisé à savoir le 1,2 dichloropropane.

Le but que s'est fixé le demandeur est de proposer un procédé de fabrication d'un matériau polymérique échangeur d'ions à fonctions sulfonique qui pallie les inconvénients précités.

Ce but est parfaitement atteint par le procédé de l'invention qui consiste à :
a) greffer sur ledit matériau un monomère éthyléniquement insaturé à fonction amine tertiaire,
b) faire réagir sur le matériau ainsi greffé du sulfite de sodium.

Le sulfite de sodium est un produit courant, bon marché et facile d'utilisation.

Bien sûr la réaction générale du sulfite de sodium sur une amine tertiaire est bien connue pour donner une amine secondaire, de la soude et un sulfonate de sodium, du type RCH₂SO₃Na.

Cependant étant donné que le matériau polymérique est à l'état solide, ce n'est que parce que la fonction amine tertiaire est supportée par un greffon que la réaction qui se déroule en phase hétérogène solide/liquide peut se développer dans de bonnes conditions.

En effet on sait qu'une réaction en phase hétérogène solide/liquide, contrairement aux réactions en phase homogène liquide/liquide, se limite à un effet de surface. Le fait que le matériau soit greffé, c'est-à-dire qu'il comporte, fixés à sa structure polymérique de base, des greffons qui sont constitués par une chaîne polymérisée du monomère à fonction amine tertiaire, permet une accessibilité très importante desdites fonctions au sulfite de sodium. Ainsi la réaction se limite aux parties greffées du matériau et se déroule dans des conditions proches d'une réaction en phase homogène liquide/liquide. C'est le mérite du demandeur que d'avoir imaginé la faisabilité d'une telle réaction et d'en avoir vérifié le bien fondé.

C'est un autre objet de l'invention que de proposer un procédé de fabrication d'un matériau polymérique échangeur mixte de cations et d'anions, comportant à la fois des fonctions sulfoniques et des fonctions amines tertiaires. Selon l'invention, ce procédé consiste à greffer sur ledit matériau polymérique un monomère éthyléniquement insaturé à fonction amine tertiaire et à faire réagir sur le matériau ainsi greffé du sulfite de sodium par défaut.

En réglant les conditions de la réaction du sulfite de sodium, de telle sorte que toutes les fonctions amines tertiaires des greffons ne soient pas impliquées dans cette réaction avec le sulfite de sodium, on conserve sur lesdits greffons une partie des fonctions amines tertiaires et on obtient les fonctions sulfoniques en substitution de la partie ayant réagi.

Selon une première variante de réalisation du procédé, on fait réagir sur le matériau greffé le sulfite de sodium en immergeant le dit matériau dans une solution aqueuse dudit sulfite, à une température et pendant une durée déterminée, la concentration en sulfite de la solution étant choisie en fonction de la capacité en fonction échangeuse sulfonique souhaitée par rapport à la capacité en fonction échangeuse amine tertiaire.

De préférence la concentration de la solution aqueuse en sulfite de sodium est comprise entre 1 et 10 %.

Selon une seconde variante de réalisation du procédé, on fait réagir le matériau greffé sur le sulfite de sodium en immergeant ledit matériau dans une solution aqueuse de sulfite de sodium de concentration donnée, et à une température donnée, le temps d'immersion étant choisi en fonction de la capacité en fonction échangeuse sulfonique souhaitée par rapport à la capacité en fonction échangeuse amine tertiaire.

Le monomère éthyléniquement insaturé à fonction amine tertiaire est un dérivé de la morpholine, par exemple le méthacrylate de morpholinoéthyl (C₁₀H₁₇NO₃) de formule générale :

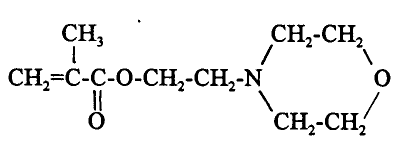

Il peut également être du type 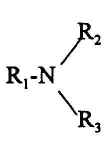 dans lequel R₁ est le radical éthyléniquement insaturé et R₂ et R₃ sont deux radicaux alkyl identiques ou différents.

Ce peut être par exemple du méthacrylate de diméthylaminoéthyl de formule générale :

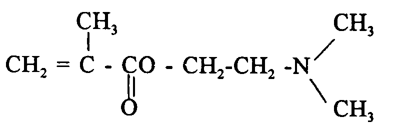

C'est un autre objet de l'invention que de proposer un matériau polymérique greffé échangeur mixte de cations et d'anions, qui est en particulier obtenu par le procédé précité. Ce matériau se caractérise en ce que il comporte sur ses greffons, à la fois des fonctions sulfoniques et des fonctions amines tertiaires.

Selon une première version préférée, les fonctions sulfoniques ont comme formule générale : 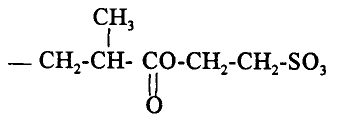 et les fonctions amines tertiaires ont comme formule générale : 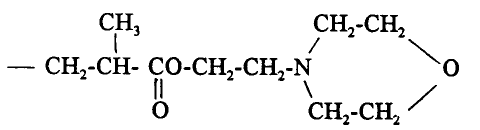 Selon une seconde version préférée du matériau greffé échangeur mixte d'ions, les fonctions sulfoniques ont comme formule générale : 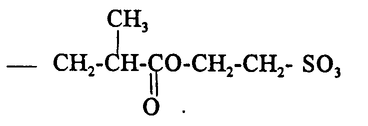 et les fonctions amines tertiaires ont comme formule générale :

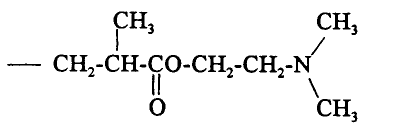

La présente invention sera mieux comprise à la lecture de la description qui va être faite de plusieurs exemples de préparation de matériaux polymériques greffé à fonction sulfonique.

Le greffage d'un matériau polymérique est une technique bien connue pour modifier les propriétés initiales du matériau, en lui apportant spécifiquement des propriétés propres au monomère mis en oeuvre. Le principe du greffage consiste à activer le matériau polymérique, par exemple par irradiation ou par activation chimique, de manière à créer des radicaux libres sur ledit matériau puis à faire se développer une réaction de polymérisation à partir desdits radicaux libres à l'aide d'un monomère éthyléniquement insaturé. Une telle technique est par exemple décrite dans le document FR-A-1 586 665.

Dans ce document les greffons comportent des fonctions échangeuses d'ions ammoniums quaternaires.

Il est rappelé que le but visé par la présente invention est de proposer un matériau polymérique échangeur d'ions à fonction sulfonique.

De manière caractéristique, selon le procédé de l'invention, on obtient un tel matériau en effectuant d'abord un greffage sur le matériau à partir d'un monomère éthyléniquement insaturé comportant des fonctions amines tertiaires, puis dans un deuxième temps en faisant agir du sulfite de sodium sur lesdites fonctions amines tertiaires.

Dans un premier exemple de réalisation, le matériau polymérique se présente sous la forme d'un tissu de coton. Celui-ci est soumis, dans un ozoneur (1,4 ampère, 0,7 bar) au flux d'un mélange d'ozone et d'oxygène pendant une heure. Il est ensuite plongé dans un bain contenant du méthacrylate de morpholinoéthyl (MEMA) de formule générale :

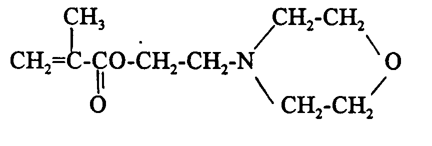

Les conditions de la réaction sont déterminées de manière à ce que le coton greffé MEMA ait une capacité de 0,8 meq/g.

Le coton ainsi greffé est immergé dans une solution de sulfite de sodium pendant deux heures à 80°C. Le sulfite de sodium réagit sur la fonction amine tertiaire en libérant la morpholine et en donnant une fonction sulfonique de formule :

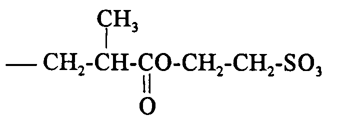

On comprend que la quantité de fonctions sulfoniques créée sur le greffon est tributaire de la concentration de la solution en sulfite de sodium. Il est donc ainsi possible soit d'obtenir du coton greffé échangeur d'ions à fonctions uniquement sulfoniques en mettant en oeuvre une solution de sulfite de sodium très concentrée soit d'obtenir un coton greffé échangeur mixte comportant à la fois des fonctions sulfoniques et des fonctions amines tertiaires.

Dans le tableau A ci-après on a reporté la répartition entre les fonctions sulfoniques et les fonctions amines tertiaires pour certaines concentrations en sulfite de sodium de la solution.

**TABLEAU A**

| | | | |
|---|---|---|---|
| Concentration en sulfite de sodium (en poids) | 1 % | 4 % | 5 % |
| Capacité en fonction sulfonique (en meq/g) | 0,34 | 0,36 | 0,45 |
| Capacité en fonction amine tertiaire (meq/g) | 0,46 | 0,44 | 0,35 |

Dans un second exemple de réalisation, on a greffé un tissu de polypropylène à l'aide du méthacrylate de morpholinoéthyl (MEMA). Pour ce faire on a préalablement soumis le tissu de polypropylène à une irradiation sous faisceau d'électrons en sorte d'obtenir un taux de greffage de l'ordre de 15 %, correspondant à une capacité en échange d'ions pour la fonction amine tertiaire, de 0,7 meq/g.

Le polypropylène ainsi greffé a été plongé dans une solution aqueuse à 10 % de sulfite de sodium à 80°C.

Dans le cas présent, c'est en faisant varier la durée de l'immersion que l'on a ajusté la capacité du polypropylène greffé échangeur d'ions en fonction sulfonique.

Pour une durée de deux heures sa capacité en fonction sulfonique est de 0,54 meq/g. Pour une durée de quatre heures elle est de 0,60 meq/g. On a donc ainsi obtenu, dans les deux cas précités, un échangeur d'ions mixte comportant à la fois des fonctions sulfoniques de formule générale : 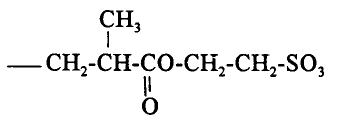 et des fonctions amines tertiaires de formule générale :

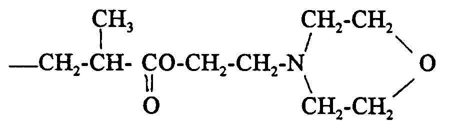

Les deux exemples de réalisation qui ont été décrits ci-dessus ne sont pas exhaustifs de l'invention. En particulier le monomère de greffage peut être tout monomère éthyléniquement insaturé, apte à réagir dans une réaction de polymérisation, comportant une fonction amine tertiaire. En particulier il peut s'agir du méthacrylate de diméthylaminoéthyl de formule générale.

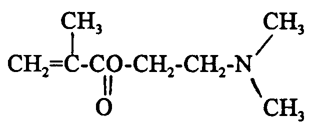

En ce qui concerne le matériau polymérique lui même, tous les matériaux sont maintenant susceptibles d'être greffés, que ce soit des matériaux fibreux cellulosiques comme le coton ou des matériaux fibreux à partir d'autres fibres naturelles telle que la laine ou la soie, que ce soit des matériaux synthétiques tels que des polyamides, polyesters, polyoléfines, polyuréthannes, voire même des polymères fluorés.

La réaction mettant en jeu le sulfite de sodium se déroule dans des conditions tout à fait classiques, comparables à celles d'une teinture pour un matériau textile. Il importe simplement de déterminer la concentration de la solution en sulfite de sodium, la température de la solution et la durée de la réaction, pour obtenir la capacité d'échange d'ions en fonction sulfonique souhaitée.

En pratique pour des taux de greffage conduisant à une capacité en fonction amine tertiaire allant jusqu'à 1 meq/g, une concentration en sulfite de sodium de l'ordre de 10 % permet de travailler en léger excès et donc d'obtenir une capacité identique en fonction sulfonique.

On a compris, à la lecture de la description ci-dessus, qu'il était très facile d'arrêter la réaction à un stade intermédiaire conduisant à l'obtention d'un échangeur mixte d'anions et de cations, à fonctions sulfoniques et à fonctions amines tertiaires. Un tel matériau est particulièrement intéressant lorsqu'il est mis en oeuvre dans des applications telle que l'électrodialyse ou l'électroélectrodialyse.

## Revendications

1. Procédé de préparation d'un matériau polymérique échangeur d'ions à fonctions sulfoniques caractérisé en ce qu'il consiste à :
a) à greffer sur ledit matériau un monomère éthyléniquement insaturé à fonction amine tertiaire,
b) faire réagir sur le matériau ainsi greffé du sulfite de sodium.

2. Procédé de préparation selon la revendication 1 d'un matériau polymérique échangeur mixte de cations et d'anions, comportant à la fois des fonctions sulfoniques et des fonctions amines tertiaires , caractérisé en ce que l'on fait réagir sur le matériau greffé du sulfite de sodium par défaut.

3. Procédé selon la revendication 1 ou 2 caractérisé en ce que l'on fait réagir sur le matériau greffé le sulfite de sodium en immergeant ledit matériau dans une solution aqueuse dudit sulfite.

4. Procédé selon l'une des revendications 1 à 3 caractérisé en ce que la concentration de la solution aqueuse en sulfite de sodium est comprise entre 1 et 10%.

5. Procédé selon l'une des revendications 1 à 4 caractérisé en ce que le monomère éthyléniquement insaturé à fonction amine tertiaire est un dérivé de la morpholine, notamment le méthacrylate de morpholinoéthyl de formule générale :

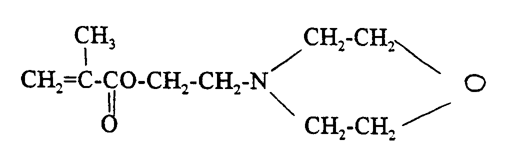

6. Procédé selon l'une des revendications 1 à 4 caractérisé en ce que le monomère éthyléniquement insaturé à fonction amine tertiaire est du type 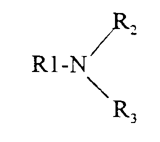 dans lequel R₁ est le radical éthyléniquement insaturé et R₂ et R₃ sont deux radicaux alkyl, notamment le métbacrylate de diméthylaminoéthyl, de formule générale :

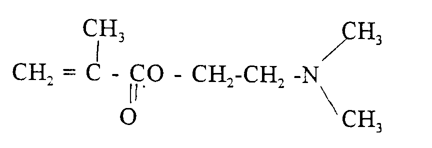

7. Matériau polymérique greffé échangeur mixte de cations et d'anions, qui est en particulier obtenu par le procédé de la revendication 2, caractérisé en ce que il comporte sur ses greffons, à la fois des fonctions sulfoniques et des fonctions amines tertiaires.

8. Matériau selon la revendication 7 caractérisé en ce que les fonctions sulfoniques ont comme formule générale : 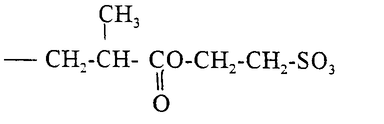 et les fonctions amines tertiaires ont comme formule générale :

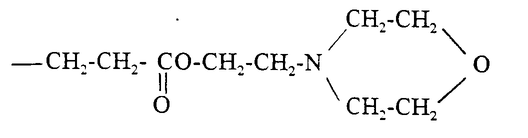

9. Matériau selon la revendication 7 caractérisé en ce que les fonctions sulfoniques ont comme formule générale : 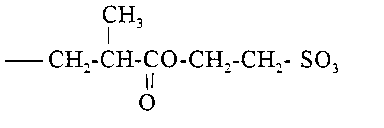 et les fonctions amines tertiaires ont comme formule générale :

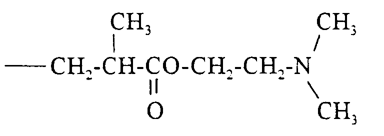

## Claims

1. Process for preparing an ion-exchange polymer material containing sulphonic functions, characterized in that it consists in:
a) grafting an ethylenically unsaturated monomer containing a tertiary amine function onto the said material,
b) reacting sodium sulphite with the material thus grafted.

2. Process according to Claim 1, for preparing a mixed cation-exchange and anion-exchange polymer material containing both sulphonic functions and tertiary amine functions, characterized in that sodium sulphite is reacted in deficit with the grafted material.

3. Process according to Claim 1 or 2, characterized in that sodium sulphite is reacted with the grafted material by immersing the said material in an aqueous solution of the said sulphite.

4. Process according to one of Claims 1 to 3, characterized in that the concentration of the aqueous sodium sulphite solution is between 1 and 10%.

5. Process according to one of Claims 1 to 4, characterized in that the ethylenically unsaturated monomer containing a tertiary amine function is a morpholine derivative, in Particular morpholinoethyl methacrylate of general formula:

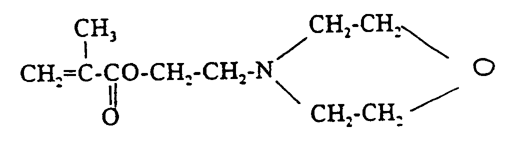

6. Process according to one of Claims 1 to 4, characterized in that the ethylenically unsaturated monomer containing a tertiary amine function is of the type 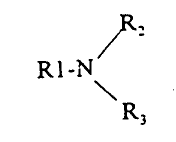 in which R₁ is the ethylenically unsaturated radical and R₂ and R₃ are two alkyl radicals, in particular dimethylaminoethyl methacrylate, of general formula:

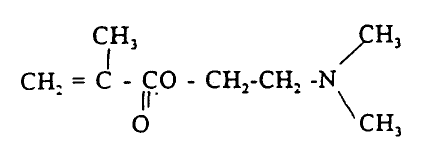

7. Mixed cation-exchange and anion-exchange grafted polymer material, which is obtained in particular by the process of Claim 2, characterized in that it comprises on its grafts both sulphonic functions and tertiary amine functions.

8. Material according to Claim 7, characterized in that the sulphonic functions have the general formula: 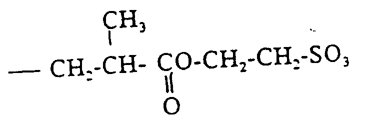 and the tertiary amine functions have the general formula:

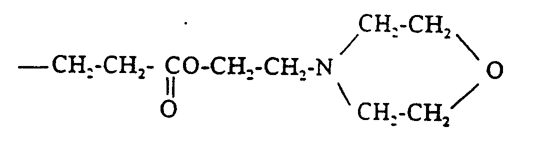

9. Material according to Claim 7, characterized in that the sulphonic functions have the general formula: 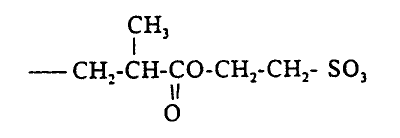 and the tertiary amine functions have the general formula:

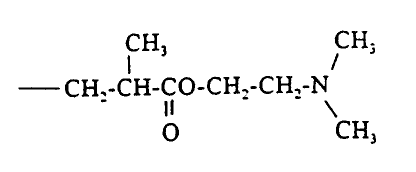

## Patentansprüche

1. Verfahren zur Herstellung eines Ionen austauschenden, Sulfonsäuregruppen enthaltenden Polymermaterials, dadurch gekennzeichnet, daß es darin besteht,
a) ein eine tertiäre Aminogruppe enthaltendes, ethylenisch ungesättigtes Monomer auf das Polymermaterial aufzupfropfen und
b) das so gepfropfte Polymermaterial mit Natriumsulfit umzusetzen.

2. Verfahren nach Anspruch 1 zur Herstellung eines gemischten, Kationen und Anionen austauschenden Polymermaterials, das sowohl Sulfonsäuregruppen als auch tertiäre Aminogruppen enthält, dadurch gekennzeichnet, daß das gepfropfte Material mit Natriumsulfit im Unterschuß umgesetzt wird.

3. Verfahren nach Anspruch 1 oder 2, dadurch gekennzeichnet, daß das gepfropfte Polymermaterial mit dem Natriumsulfit umgesetzt wird, indem das Polymermaterial in eine wäßrige Lösung dieses Sulfits eingetaucht wird.

4. Verfahren nach einem der Ansprüche 1 bis 3, dadurch gekennzeichnet, daß die Konzentration der wäßrigen Lösung an Natriumsulfit 1 bis 10 % beträgt.

5. Verfahren nach einem der Ansprüche 1 bis 4, dadurch gekennzeichnet, daß das ethylenisch ungesättigte Monomer mit tertiärer Aminogruppe ein Morpholinderivat, insbesondere das Morpholinoethylmethacrylat der folgenden allgemeinen Formel 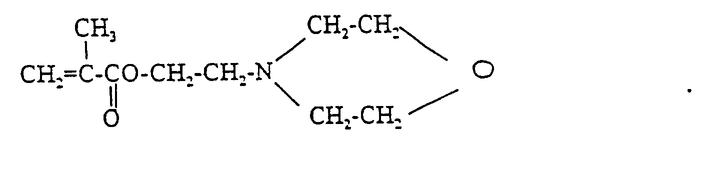 ist.

6. Verfahren nach einem der Ansprüche 1 bis 4, dadurch gekennzeichnet, daß das ethylenisch ungesättigte Monomer mit tertiärer Aminogruppe ein Monomer vom Typ 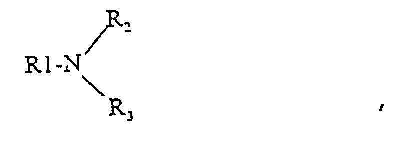 worin R₁ die ethylenisch ungesättigte Gruppe bedeutet und R₂ und R₃ zwei Acrylreste darstellen, und insbesondere das Dimethylaminoethylmethacrylat der folgenden Formel 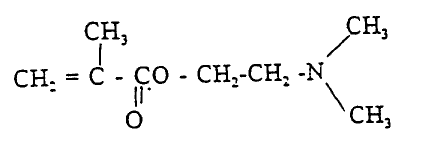 ist.

7. Gemischtes, Kationen und Anionen austauschendes gepfropftes Polymermaterial, das insbesondere nach dem Verfahren von Anspruch 2 hergestellt wird, dadurch gekennzeichnet daß die Pfropfzweige gleichzeitig Sulfonsäuregruppen und tertiäre Aminogruppen enthalten.

8. Material nach Anspruch 7, dadurch gekennzeichnet, daß die Sulfonsäuregruppen die allgemeine Formel 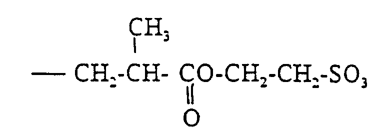 und die tertiären Aminogruppen die allgemeine Formel 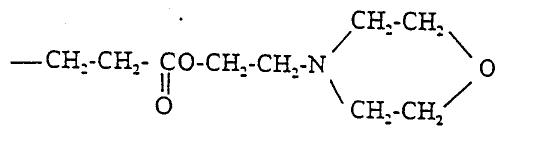 aufweisen.

9. Material nach Anspruch 7, dadurch gekennzeichnet, daß die Sulfonsäuregruppen die allgemeine Formel 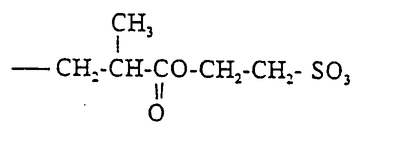 und die tertiären Aminogruppen die allgemeine Formel 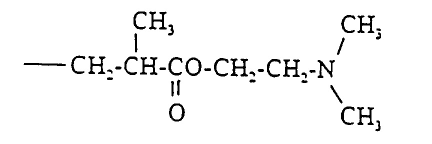 aufweisen.
